**Europäisches Patentamt**

**European Patent Office**

**Office européen des brevets**

(11) Veröffentlichungsnummer: **0 023 529**
A2

# (12) EUROPÄISCHE PATENTANMELDUNG

(21) Anmeldenummer: 80100032.4

(22) Anmeldetag: 04.01.80

(51) Int. Cl.³: **F 01 C 1/36,** F 01 C 19/00,
F 02 B 55/14, F 02 G 3/00

(30) Priorität: 07.08.79 DE 2931943

(43) Veröffentlichungstag der Anmeldung: 11.02.81
**Patentblatt 81/6**

(84) Benannte Vertragsstaaten: **AT BE CH FR GB IT LU NL
SE**

(71) Anmelder: **Henkel, Ernst, Am Lehester Deich 45,
D-2800 Bremen 33 (DE)**

(72) Erfinder: **Henkel, Ernst, Am Lehester Deich 45,
D-2800 Bremen 33 (DE)**

(74) Vertreter: **Eisenführ & Speiser,
Eduard-Grunow-Strasse 27, D-2800 Bremen 1 (DE)**

(54) **Aussenachsige Drehkolbenmaschine.**

(57) Eine mit allen unter Druck stehenden gasförmigen
Arbeitsmedien betreibbare außenachsige Drehkolbenmaschine hat einen Kolbenläufer (5) mit zwei diametralen
Kolben (7) und zwei Absperrläufern (12, 13), deren Durchmesser halb so groß wie derjenige des Kolbenläufers ist,
und die diametral zu diesem angeordnet sind. Während
der Arbeitsbewegung bleibt der Hebelarm des Kraftangriffs stets gleich, und die Drehzahl läßt sich in einem
weiten Bereich regeln; die Drehrichtung läßt sich umsteuern. Für den Brennkraftbetrieb ist eine außenliegende
Brennkammer (30) vorgesehen, die vorzugsweise im
Innern eines Drehschiebers (23) angeordnet ist, welcher
auf der Welle (14) des einen Absperrläufers (12) sitzt.
Kanäle verbinden das Gehäuse (31) des Drehschiebers
mit dem Arbeitsraum (4). Das Volumen der Brennkammer
(30) kann verändert werden.

Beschreibung

Die Erfindung betrifft eine außenachsige Drehkolbenmaschine mit einem kreisförmigen Kolbenläufer, dessen
radial vorspringender Kolben innerhalb einer ruhenden
Arbeitsraumwandung mit der Umfangsausnehmung eines
sich auf dem Kolbenläufer abwälzenden Absperrläufers
in Kämmeingriff steht, wobei die Wellen des Kolbenläufers und des Absperrläufers durch Koppelzahnräder
miteinander verbunden sind.

Eine Drehkolbenmaschine dieser Bauart ist im Prinzip
bekannt (WANKEL, Einteilung der Rotations-Kolbenmaschinen, DVA Stuttgart 1963; Tabelle 7, Einteilungsplatz III.11). Der Vorteil einer solchen Drehkolbenmaschine besteht darin, daß alle bewegten Teile
gleichmäßig rotieren und der Hebelarm des Kraftangriffs stets gleichbleibt. Sowohl im Dampf- als
auch im Brennkraftbetrieb führt das zu einem
günstigen Kräfteverlauf und - theoretisch -
einer guten Energieausnutzung. Gleichwohl hat
sich eine derartige Drehkolbenmaschine bislang
in der Praxis aus verschiedenen Gründen nicht
einführen können.

Der Erfindung liegt die Aufgabe zugrunde, eine
technisch vorteilhafte und wirtschaftliche verwertbare Bauart einer Drehkolbenmaschine der eingangs
geschilderten Art anzugeben.

Grundsätzlich besteht die Erfindung darin, daß der Kolbenläufer zwei diametral angesetzte Kolben aufweist, die mit zwei diametral zum Kolbenläufer angeordneten Absperrläufern von halbem Kolbenläufer-Durchmesser kämmen. Eine so ausgebildete Maschine ist mit jedem gasförmigen, gespannten Arbeitsmedium betreibbar und zeichnet sich in jedem Falle durch großwinklige Arbeitshübe aus. Über den Druck und die Menge des zugeführten Arbeitsmediums läßt sich die Drehzahl in einem außerordentlich weiten Bereich regeln; praktisch vom Kriechen bis zur Höchstdrehzahl. Eine derartige Maschine bedarf also keines Getriebes, zumal auch eine Drehrichtungs-Umsteuerung auf einfache Weise - selbst im Brennkraftbetrieb - möglich ist.

Die Anordnung ist insbesondere so getroffen, daß eine von der Welle des einen Absperrläufers angetriebene Steuereinrichtung den Zu- und Abstrom des Arbeitsmediums in den bzw. aus dem Arbeitsraum steuert. Der Begriff "Arbeitsraum" ist im vorliegenden Zusammenhang auch dann verwendet, wenn tatsächlich mehrere getrennte Arbeitsräume vorhanden sind. Als Steuerorgan dient vorzugsweise ein Drehschieber (Rundschieber), der auf der Welle eines Absperrläufers sitzt, und dessen ihn umgebendes Gehäuse durch Kanäle mit dem Arbeitsraum verbunden ist.

Gemäß einer Weiterbildung der Erfindung ist zur Verwendung der Drehkolbenmaschine als Brennkraft-

0023529

maschine eine außenliegende Brennkammer vorgesehen, der das im Arbeitsraum angesaugte und komprimierte, gasförmige Arbeitsmedium zugeführt wird, in der die Verbrennung erfolgt, und aus der das gespannte Arbeitsmedium winkelversetzt in den Arbeitsraum zurückgeführt wird. Die äußere Verbrennung hat eine Reihe von Vorteilen. Sie verringert die thermische Belastung - insbesondere die thermische Wechselbelastung - der bewegten Teile der Drehkolbenmaschine. Sie erlaubt ferner, eine feinfühlige Gemischregelung mit relativ einfachen Mitteln durchzuführen.

Letzteres läßt sich insbesondere dadurch verwirklichen, daß das Volumen der Brennkammer veränderlich ist. Dabei kann die Brennkammer mit Zusatzkammern verbindbar sein oder sich in einem Zylinderraum fortsetzen, dessen wirksames Volumen durch einen Steuerkolben veränderbar ist.

Eine baulich besonders vorteilhafte Anordnung ergibt sich, wenn die Brennkammer im wesentlichen im Innern des Drehschiebers angeordnet ist, der Drehschieber also den Brennraum umgibt.

Weitere vorteilhafte Ausbildungen der Drehkolbenmaschine und ihrer Hilfsaggregate sind Merkmale weiterer Unteransprüche.

Die Zeichnungen veranschaulichen die Erfindung an Ausführungsbeispielen, und zwar zeigt in schematischer Darstellung:

Fig. 1    einen Querschnitt durch die Drehkolbenmaschine gemäß der Linie
          I-I in Fig. 2;

Fig. 2    eine Draufsicht auf die Drehkolben-
          maschine bei abgenommenem Gehäuse-
          deckel;

Fig. 3    einen Schnitt gemäß der Linie III-III

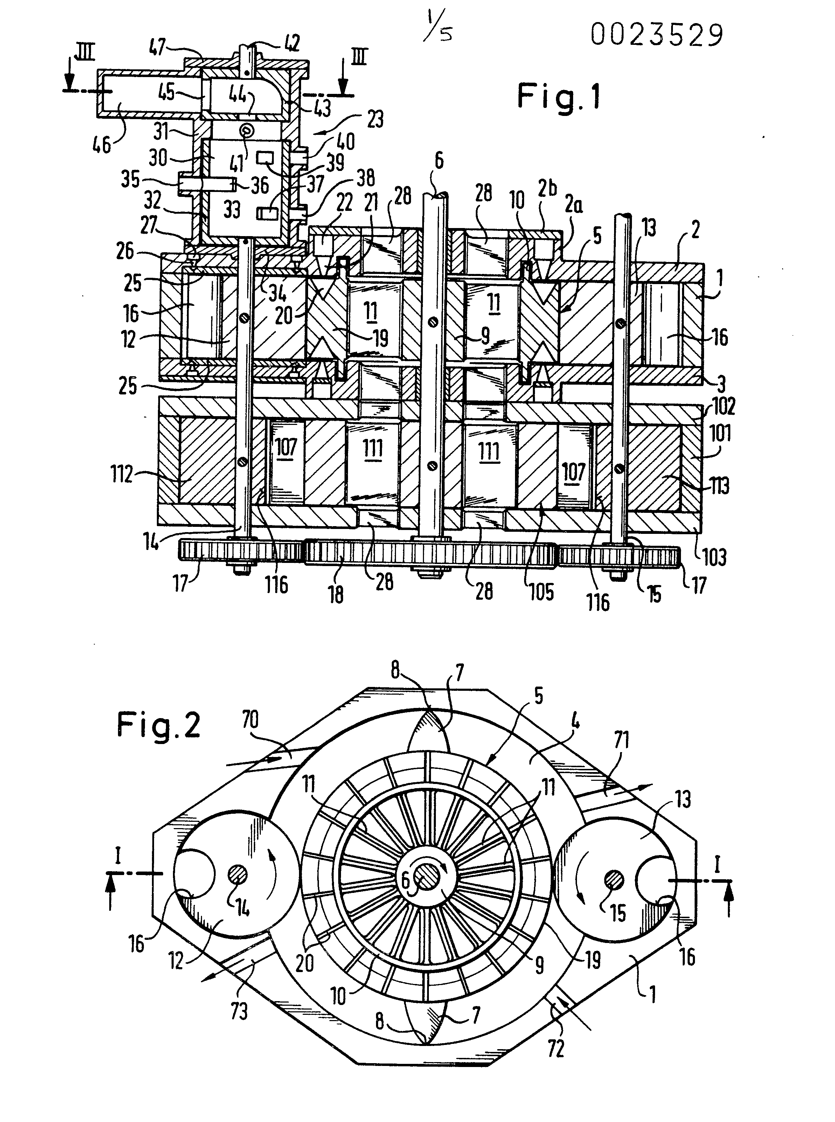

          in Fig. 1;

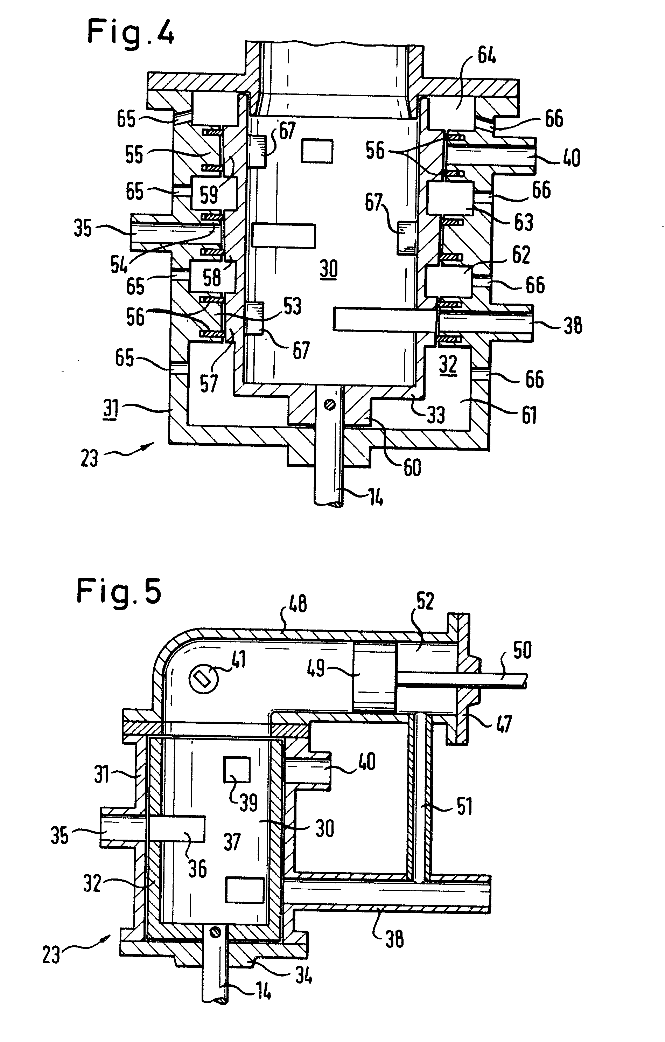

Fig. 4    eine Alternativausbildung des in
          Fig. 1 dargestellten Drehschiebers
          im Querschnitt;

Fig. 5    eine Alternativausbildung der Mittel
          zur Brennraum-Größenveränderung;

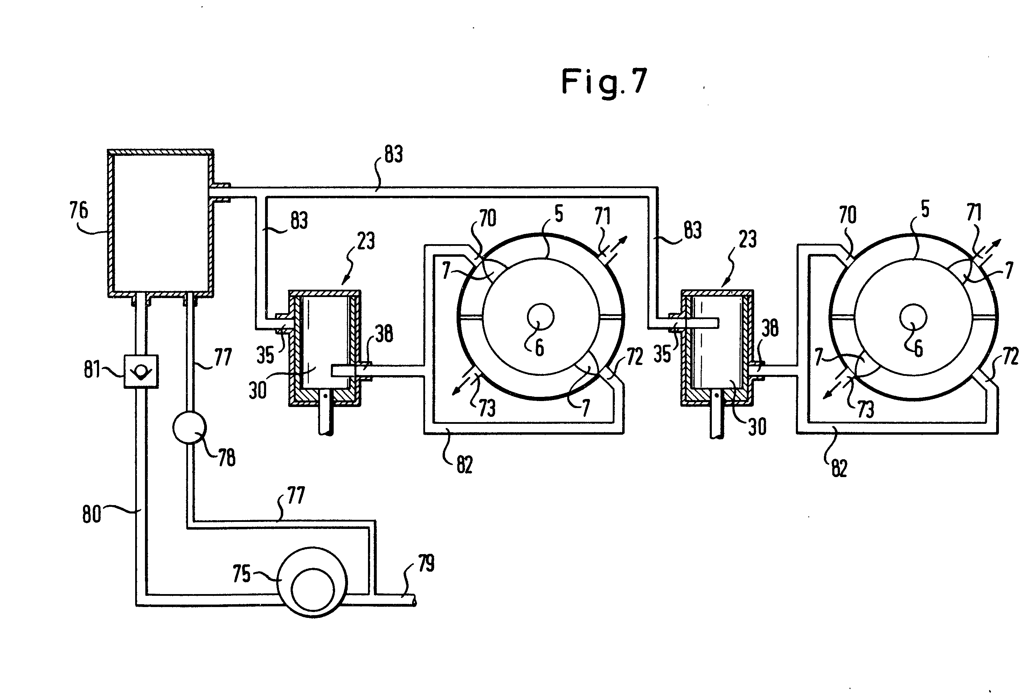

Fig. 6    eine abgewickelte Teildarstellung
          der in Fig. 1 dargestellten Dichtungsmittel;

Fig. 7    in Schaubildform die Anordnung bei
          einer mit mehreren Brennkammern
          arbeitenden Mehrkammermaschine;   und

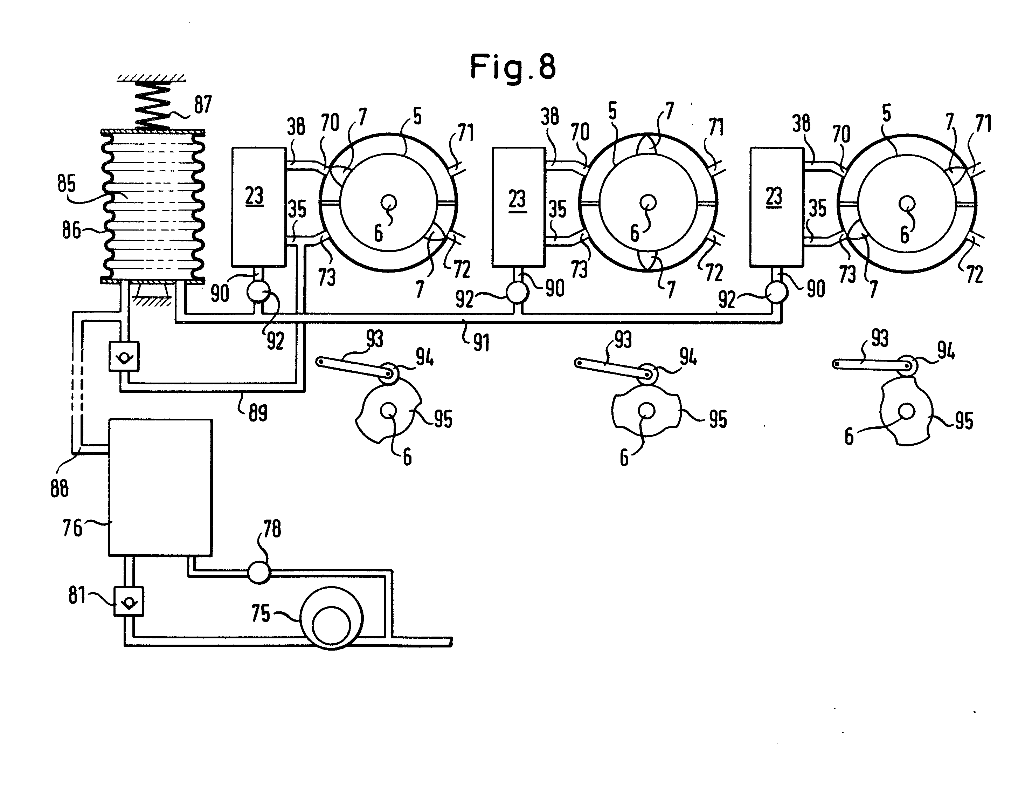

Fig. 8    ebenfalls in Schaubilddarstellung
          eine Mehrkammermaschine mit Mitteln
          zu derem Starten.

Die in Fig. 1 dargestellte Drehkolbenmaschine ist eine Zweikammermaschine; die als Hauptstufe und Abgasstufe hintereinandergeschaltet sind. Die konstruktive Ausbildung beider Stufen ist im wesentlichen die gleiche, so daß auf eine doppelte Erläuterung verzichtet werden kann. Gleiche Teile der (in Fig. 1 unten liegenden) Abgasstufe sind mit dem um 100 erhöhten gleichen Bezugszeichen der Hauptstufe bezeichnet.

Im stationären Gehäuse 1 mit den Deckeln 2 und 3 ist zentrisch ein zylindrischer Arbeitsraum 4 ausgebildet, in dem der Kolbenläufer 5 um die Abtriebswelle 6 drehbar untergebracht ist. Am Umfang des Läufers 5 sind diametral gegenüber, also um 180° gegeneinander versetzt, zwei gleichartige Kolben 7 angeordnet, deren Querschnittsform der Fig. 2 zu entnehmen ist. Entlang den Kolben-Scheitellinien 8 können Dichtungsleisten angeordnet sein. Ein zentrischer, die Nabe 9 ringförmig umgebender Teil 10 des Kolbenläufers 5 ist durchbrochen, und zwar mittels angestellter Stege 11 als Lüfterrad ausgebildet, so daß die radial auswärts anschließende Ringwandung des Kolbenläufers 5 von innen her gekühlt wird.

An zwei in bezug auf die Welle 6 des Kolbenläufers 5 diametral einander gegenüberliegenden Punkten sind Absperrläufer 12 und 13 um Wellen 14, 15 derart angeordnet, daß sich ihre Umfangsflächen auf derjenigen des Kolbenläufers 5 abwälzen. Ausnehmungen 16 in jedem Absperrläufer 12, 13 erlauben den hindernisfreien, abgedichteten Durchtritt der Kolben 7 am Kolbenläufer 5. Der Durchmesser der Absperrläufer 12, 13 ist halb so groß wie der Druchmesser des Kolbenläufers 5. Die richtige Relativstellung der Absperrläufer 12, 13 zum Kolbenläufer 5 sichern Koppelzahnräder 17 auf den Wellen 14, 15 der Absperrläufer 12, 13, welche mit einem auf der Welle 6 des Kolbenläufers 5 befestigten Koppelzahlrad 18 kämmen. Das Durchmesserverhältnis der Koppelzahnräder entspricht denjenigen der entsprechenden Läufer.

Zum Zwecke der stirnseitigen Abdichtung des Kolbenläufers 5 gegenüber den Gehäusedeckeln 2, 3 (bzw. einem zur Welle 6 konzentrischen Deckeleinsatz 2a, 2b) sind in der ringförmigen Stirnseite der Ring- •

wandung 19 des Kolbenläufers 5 Schaufeln 20 ausgebildet, deren Tangentialschnittausbildung aus der Abwicklungsdarstellung der Fig. 6 hervorgeht, während sich die Querschnittsform aus Fig. 1 ergibt. In die axial gegenüberliegenden Deckelteil-Wandungen sind düsenartige Öffnungen 21 eingearbeitet, deren Anstellung in tangentialer Richtung gegenüber den Schaufeln 20 wiederum Fig. 6 zu entnehmen ist. Untereinander stehen die Öffnungen 21 über einen Ringkanal 22 in Verbindung, welcher wiederum - in nicht darstellter Weise - an den vom weiter unten zu beschreibenden Drehschieber 23 zum Arbeitsraum 4 führenden Kanal für das Arbeitsmedium angeschlossen ist. Befindet sich in jenem Kanal Arbeitsmedium unter Druck, so wird es nicht nur in den Arbeitsraum 4 eingeführt, sondern auch in die taschenförmigen Räume 24 zwischen den Schaufeln 20 geblasen, deren Außenfläche natürlich nur einen sehr engen Ringspalt gegenüber den ihnen zugekehrten Flächen der Gehäusedeckelteile hat; dabei kann eine Drosselung des einströmenden Arbeitsmediums für alle oder einen Teil der Öffnungen 21 vorgesehen sein, wobei die Düsenform der Öffnungen 21 selbst eine Drosselung verursacht. Die vorstehend beschriebene Dichtungsmaßnahme bezieht ihre Wirkung nicht zuletzt auch aus dem Druckausgleich, den sie jeweils zwischen den beaufschlagten Abschnitten des Arbeitsraumes und den daran anschließenden Spalten bewirkt; ferner ist die Dynamik des Arbeitstakt-Ablaufes zu berücksichtigen.

Eine ähnliche Stirnseiten-Abdichtung kann für die Absperrläufer 12, 13 vorgesehen sein, wie dies für

0023529

den Absperrläufer 12 in Fig. 1 dargestellt ist. Er ist stirnseitig mit kreisrunden Platten 25 belegt, welche auch seine Ausnehmung 16 überdecken. Eine ringförmige Schaufelausbildung mit taschenartigen Ausnehmungen 24, wie sie für den Kolbenläufer 5 in Fig. 6 dargestellt ist, ist außenseitig auf den Platten 25 vorgesehen. Sie wirkt mit Öffnungen 26 und einem Ringkanal 27 im Gehäusedeckel 2 zusammen, wobei der Ringkanal 27 ebenfalls (gegebenenfalls gedrosselt) an den vorerwähnten Verbindungskanal zwischen dem Drehschieber 23 und dem Arbeitsraum 4 angeschlossen ist.

In den Gehäusedeckel-Einsätzen 2a, 2b, dem Gehäusedeckel 3 sowie den Gehäusedeckeln 102, 103 sind Öffnungen 28 für die axial die Maschine durchströmende Kühlluft vorgesehen; im Bereich der Durchtrittsöffnungen 28 können (angestellte) Kühlluft-Leitschaufeln vorgesehen sein.

Der Drehschieber 23 umschließt auch die außenliegende Brennkammer 30 der im Beispiel für den Brennkraftbetrieb ausgelegten Drehkolbenmaschine. Im Gehäuse 31 ist die im wesentlichen zylindrische Schieberbuchse 32 drehbar gelagert. Sie ist unterseitig durch das integrale Bodenteil 33 verschlossen und mit diesem an der Welle 14 des Absperrläufers 12 befestigt. Durch den Bodendeckel 34 ist das Gehäuse 31 unterseitig verschlossen.

Das Gehäuse 31 hat Anschlüsse für mehrere radial ankommende bzw. abgehende, das Arbeitsmedium führende Kanäle. Durch den Anschlußstutzen 35 wird verdichtetes Arbeitsmedium (Luft-Brennstoff-Gemisch oder nur Verbrennungsluft, in die die benötigte Brennstoffmenge später eingespritzt wird) zugeführt; das verdichtete Arbeitsmedium kann in die Brennkammer 30 eintreten, wenn - wie dies Fig. 1 zeigt - der Steuerschlitz 36 in der Buchse 32 über dem Anschlußstutzen 35 liegt.

Durch den Steuerschlitz 37 in der Buchse 32 und den Anschlußstutzen 38 im Gehäuse 31 tritt das gespannte Arbeitsmedium aus der Brennkammer 30 aus und gelangt von dort (erneut) in hier nicht näher dargestellter Weise in den Arbeitsraum 4 der Hauptstufe der Drehkolbenmaschine. Der Verbrennungsvorgang hat in der Brennkammer 30 stattgefunden, nachdem der Steuerschlitz 36 den Anschlußstutzen 35 verlassen, und ehe der Steuerschlitz 37 den Anschlußstutzen 38 erreicht hatte.

Am Ende der Öffnungsphase des Austritts-Steuerschlitzes 37 bis kurz nach dessen Schließen öffnet ein weiterer Steuerschlitz 39 in der Buchse 32 zum Anschlußstutzen 40 hin. Dieser ist mit der letzten Abgasstufe der Drehkolbenmaschine verbunden, in welcher der Arbeitsdruck auf einen Wert abgesunken ist, welcher niedriger als der Enddruck in der Brennkammer 30 ist, so daß auf diese Weise die Restgase aus der Brennkammer 30 abgezogen werden.

Bei 41 ist die Zündkerze angedeutet.

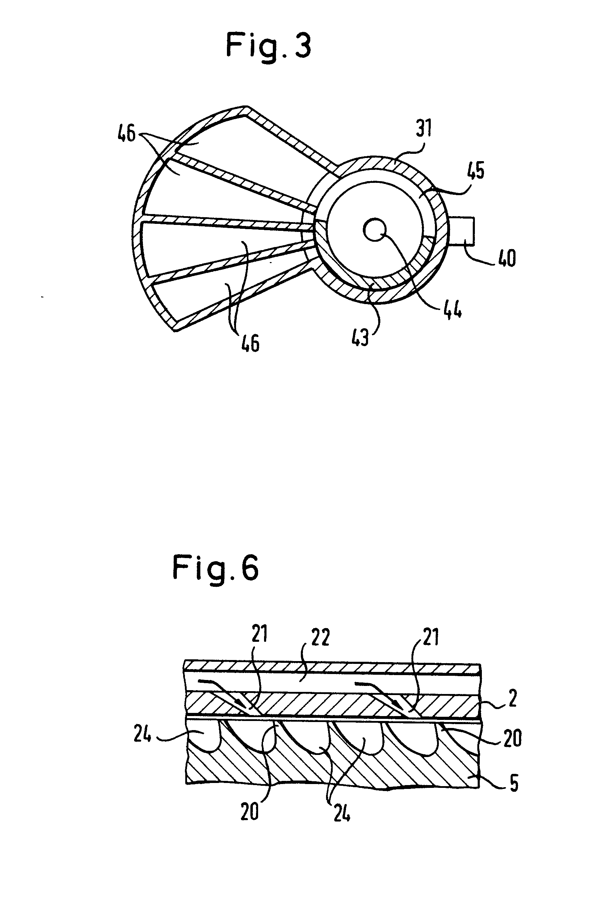

Das Volumen der Brennkammer ist veränderlich. Gemäß Fig. 1 und 3 kann eine stufenweise Vergrößerung des Brennkammervolumens dadurch vorgenommen werden, daß ein an einer Steuerwelle 42 sitzender Schieberkörper 43, der mit einer Bodenöffnung 44 und einer sich über ein Umfangssegment erstreckenden Seitenöffnung 45 versehen ist (Fig. 3) je nach Stellung der Öffnung 45 eine oder mehrere der Kammern 46 mit dem von der Buchse 32 umschlossenen Raum verbindet. Die Kammern 46 sind von segmentartigen Radialerweiterungen des Gehäuses 31 gebildet. Ein Deckel 47 schließt das Gehäuse 31 nach oben hin ab.

Fig. 5 veranschaulicht eine alternative Ausführungsform der Volumenveränderung der Brennkammer 30. An das Gehäuse 31 ist ein - im Beispiel abgekröpfter - Zylinder 48 angeflanscht, welcher mit dem von der Buchse 32 umschlossenen Raum in offener Verbindung steht, und in der ein Kolben 49 mit Hilfe einer Steuerstange 50 längsverschieblich ist. Durch Verschieben des Kolbens 49 kann die Größe der Brennkammer 30 stufenlos geändert werden. Eine Druckentlastung des Kolbens 49 wird durch einen Kanal 51 bewirkt, welcher den Anschlußstutzen 38 mit dem Zylinderraum 52 hinter dem Kolben 49 verbindet.

Fig. 4 zeigt eine abgewandelte Ausführungsform des Drehschiebers 23 mit der darin befindlichen Haupt-Brennkammer 30. Das Gehäuse 31 hat ringförmige, radial einwärts ragende Vorsprünge 53, 54 und 55, in die jeweils ein Paar von Dichtungsringen 56 eingelassen ist. Die Drehschieberbuchse 32, deren Außendurchmesser deutlich kleiner als der Innendurchmesser des Gehäuses 31 ist, hat entsprechend radial auswärts gerichtete, ringförmige Vorsprünge 57, 58 und 59, welche an den Dichtungsringen 56 der Vorsprünge 53, 54 und 55 anliegen. Die Innenflächen der Vorsprünge 53, 54, 55 und die Außenflächen der Vorsprünge 57, 58, 59 sind Abschnitte einer Kegelfläche, so daß durch axiale Einstellung der Drehschieberbuchse 32 gegenüber dem Gehäuse 31 der Dichtungsspalt zwischen den einander zugeordneten Vorsprüngen sehr genau eingestellt werden kann; gegebenenfalls können die Dichtungen 56 ganz entfallen.

Zwischen dem Gehäuse 31 und der Buchse 32 sind infolge der vorstehend erwähnten Vorsprünge sowie eines Bundes 60 am Boden 33 der Buchse 32 Ringkammern 61, 62, 63 und 64 ausgebildet, durch die ein Kühlmittel geleitet werden kann. Beispielsweise kann Kühlluft durch Öffnungen 65 ein- und durch Öffnungen 66 austreten. An der Innenwand der Buchse 32 angebrachte Stege 67 ragen in die Brennkammer 30 und dienen der Verwirbelung des darin zu verbrennenden Brennstoff-Luft-Gemisches.

Im Gehäuse 1 (der Hauptstufe) sind Kanäle 70, 71, 72 und 73 vorgesehen, welche in Form von Bohrungen oder Schlitzen vom Arbeitsraum 4 nach außen führen. Beim Brennkraftbetrieb der Drehkolbenmaschine ist beispielsweise der Kanal 73 mit dem Anschlußstutzen 35 verbunden, so daß die zuvor durch den Kanal 72 angesaugte Verbrennungsluft (bzw. ein Luft-Brennstoff-Gemisch) in die Brennkammer 30 gedrückt wird. Das nach dem Verbrennungsvorgang unter Druck stehende Arbeitsmedium wird aus dem Anschlußstutzen 38 in den Kanal 70 eingeführt und wirkt dort auf einen der Kolben 7. Aus dem Kanal 71 wird das - weitgehend - expandierte Arbeitsmedium abgeführt. Wird die Drehkolbenmaschine nicht zum Ansaugen und Komprimieren des Arbeitsmediums herangezogen, weil sie im Dampf- oder Heizluft-Betrieb läuft, oder weil die Verdichtung des Arbeitsmediums durch Hilfsaggregate vorgenommen wird, dann kann der Kanal 72 ebenfalls zur Einführung von Arbeitsmedium unter Druck und der Kanal 73 zum Abführen des Arbeitsmediums benutzt werden; in diesem Falle werden stets beide Kolben 7 gleichlaufend beaufschlagt.

Die tatsächlichen Verbindungsleitungen zwischen den Anschlußstücken am Gehäuse 31 des Drehschiebers 23 und der Brennkammer 30 mit den Kanälen im Gehäuse 1 sind nicht dargestellt; das gleiche gilt für die Abzeigleitungen zu den Ringkanälen 22, 27.

Gemäß Fig. 1 ist unter bzw. neben der Hauptstufe der Drehkolbenmaschine für deren Brennkraftbetrieb eine Abgasstufe angeordnet, die im wesentlichen mit der Hauptstufe baugleich ist. Das Gehäuse 101 ist von Deckeln 102 und 103 abgeschlossen. Die Abtriebswelle 6 ist auch mit dem Kolbenläufer 105 verbunden, und entsprechendes gilt für die Wellen 14, 15 in bezug auf die Absperrläufer 112, 113. Es sind lediglich die Kolben 107 am Kolbenläufer 105 und damit auch die Absperrläufer 112, 113 gegenüber den entsprechenden Bauteilen der Hauptstufe winkelversetzt, damit das aus dem Kanal 71 aus der Hauptstufe austretende Abgas bei seiner unverzüglichen Einleitung in einen dem Kanal 70 der Hauptstufe entsprechenden Kanal der Abgasstufe auf einen "passend" stehenden Kolben 107 trifft. Da die Abgasstufe in keinem Falle anzusaugen und zu komprimieren braucht, können in der Abgasstufe die den Kanälen 70 und 72 entsprechenden Kanäle der Abgasstufe untereinander verbunden sein, so daß dort in jedem Falle beide Kolben 107 gleichlaufend beaufschlagt werden.

Fig. 7 zeigt den schon angedeuteten andersartigen Betrieb der Drehkolbenmaschine mit einem externen Verdichter 75, welcher auf einen Speicher 76 arbeitet. Über eine Leitung 77 und ein Ventil 78 ist der Speicher 76 mit der Ansaugleitung 79 des Verdichters 75 verbunden. In der Druckleitung 80 des Verdichters 75 befindet sich ein Rückschlagventil 81.

Gemäß Fig. 7 sind ferner zwei gleichartige Drehkolbenmaschinen-Einheiten vorgesehen, die auf einer gemeinsamen Welle 6 sitzen, deren Kolben 7 aber jeweils um 90° gegeneinander versetzt sind; die Darstellungen sind weiter schematisiert und zeigen keine Absperrläufer. Jeder Maschineneinheit ist ein eigener Drehschieber 23 mit Brennkammer 30 zugeordnet. Beide sind mit ihren Anschlußstutzen 35 mittels einer Leitung 83 an den Kanal 76 angeschlossen. Da Ansaugen und Kompression durch die Drehkolbenmaschine wegfallen, sind in beiden Fällen die Kanäle 70 und 72 über gleichartige Zweigleitungen 82 mit dem jeweils zugehörigen Anschlußstutzen 38 verbunden. Selbstverständlich können auch hier Abgasstufen vorgesehen sein, welche ihr Arbeitsmedium von den Kanälen 71 und 73 erhalten.

Fig. 8 veranschaulicht, wie eine mit mehreren Einheiten oder Kammern ausgestattete und mit Fremdkompression ausgestattete Drehkolbenmaschine der vorliegenden Art gestartet werden kann, ohne daß es eines gesonderten Anlassers bedarf. Neben dem Speicher 76 ist ein weiterer Zwischenspeicher 85 vorgesehen, der aus einem elastischen Metallbalg 86 besteht und durch eine Feder 87 belastet ist. Über eine Leitung 88 steht er mit dem Speicher 76 in Verbindung, wobei im vorliegenden Fall der Verdichter 75 mit dem Speicher 76 nur für den Fall vorgesehen sind, daß zum Startbeginn der Speicher 85 nicht gefüllt ist.

Im regulären Betrieb der hier als Dreikammermaschine dargestellten Drehkolbenmaschine, welcher (im Gegensatz zu Fig. 7) nach den anhand von Fig. 1 beschriebenen Verfahren abläuft, wird im Nebenschluß über die Leitung 89 der Speicher 85 gefüllt; im übrigen wird das in der Maschine komprimierte Arbeitsmedium durch den Kanal 73 und das Anschlußstück 38 in den Drehschieber 23 mit der darin befindlichen Brennkammer geleitet. In jede Brennkammer mündet auch eine Zweigleitung 90 der Vorlaufleitung 91 vom Speicher 85; Ventile 92 sperren die Abzweigleitungen 90 normalerweise ab.

Die Ventile 92 unterliegen in nicht mehr dargestellter Weise der Steuerung eines jeweils zugeordneten Hebels 93, der an seinem freien Ende eine Rolle 94 trägt, welche auf einer Nockenscheibe 95 abläuft. Die Nockenscheiben 95 sitzen mit auf der gemeinsamen Welle 6 aller Drehkolbenmaschinen-Einheiten und haben jeweils eine bestimmte Winkelstellung in bezug auf den zugehörigen Kolbenläufer 5. Auf diese Weise repräsentiert die Stellung des Hebels 93 die Stellung der Kolben 7 der zugehörigen Maschineneinheit. In Abhängigkeit hiervon wird beim Starten das Ventil 92 zum Drehschieber 23 mit der Brennkammer 30 derjenigen Einheit geöffnet, deren Kolben so stehen, daß die Expansion der gleichzeitig gezündeten Verbrennungsgase aus dem Verbindungsstück 38 in den Kanal 70 zur Rotation des zugehörigen Kolbenläufers 5, damit zur Drehung der Welle 6 und der Einleitung von Arbeitszyklen auch bei den anderen Einheiten führt. Selbstverständlich kann anstelle der exemplarisch dargestellten mechanischen Steuerung auch eine elektrische oder elektronische treten.

EISENFÜHR & SPEISER

BREMEN

PATENTANWÄLTE
DIPL.-ING. GÜNTHER EISENFÜHR
DIPL.-ING. DIETER K. SPEISER
DR. RER. NAT. HORST ZINNGREBE
DR.-ING. WERNER W. RABUS

0023529

UNS ZEICHEN   H 672

ANMELDER / INH   HENKEL

AKTENZEICHEN   Neuanmeldung

DATUM   6. August 1979

Ernst Henkel, Am Lehester Deich 45, 2800 Bremen 33

-----------------------------------------------------

Außenachsige Drehkolbenmaschine

-----------------------------------------------------

## A n s p r ü c h e

1. Außenachsige Drehkolbenmaschine mit einem kreisförmigen Kolbenläufer, dessen radial vorspringender Kolben innerhalb einer ruhenden Arbeitsraumwandung mit der Umfangsausnehmung eines sich auf dem Kolbenläufer abwälzenden Absperrläufers in Kämmeingriff steht, wobei die Wellen des Kolbenläufers und des Absperrläufers durch Koppelzahnräder miteinander verbunden sind, dadurch gekennzeichnet, daß der Kolbenläufer (5) zwei diametral angesetzte Kolben (7) aufweist, die mit zwei diametral zum Kolbenläufer angeordneten Absperrläufern (12, 13) von halbem Kolbenläuferdurchmesser kämmen.

2. Drehkolbenmaschine nach Anspruch 1, dadurch gekennzeichnet, daß eine von der Welle (14) des einen Absperrläufers (12) angetriebene Steuereinrichtung (23)

GE/gj

TELEGI   ELEFON (04 21) ·7 20 48 · EDUARD-GRUNOW-STRASSE 27 · D 2800 BREMEN 1
·AT · TELEX 02 44 020 FEPAT · BREMER BANK 100 9072 · POSTSCHECK HAMBURG 25 57 67-209

den Zu- und Abstrom des Arbeitsmediums in den bzw.
aus dem Arbeitsraum (4) steuert.

3. Drehkolbenmaschine nach Anspruch 2, dadurch
gekennzeichnet, daß ein Drehschieber (Rundschieber)
(23) auf der Welle (14) eines Absperrläufers (12)
sitzt und das ihn umgebende Gehäuse (31) durch
Kanäle mit dem Arbeitsraum (4) verbunden sind.

4. Drehkolbenmaschine nach einem der vorhergehenden
Ansprüche, dadurch gekennzeichnet, daß zur Verwendung als Brennkraftmaschine eine außenliegende
Brennkammer (30) vorgesehen ist, der das im
Arbeitsraum (4) angesaugte und komprimierte, gasförmige Arbeitsmedium zugeführt wird, in der die
Verbrennung erfolgt, und aus der das gespannte
Arbeitsmedium winkelversetzt in den Arbeitsraum
zurückgeführt wird.

5. Drehkolbenmaschine nach Anspruch 3 und 4,
dadurch gekennzeichnet, daß die Brennkammer (30)
im wesentlichen im Innern des Drehschiebers (23)
angeordnet ist.

6. Drehkolbenmaschine nach Anspruch 4, dadurch
gekennzeichnet, daß das Volumen der Brennkammer (30)
veränderlich ist.

7. Drehkolbenmaschine nach Anspruch 6, dadurch
gekennzeichnet, daß die Brennkammer (30) mit Zusatzkammern (46) verbindbar ist.

8. Drehkolbenmaschine nach Anspruch 6, dadurch
gekennzeichnet, daß sich die Brennkammer (30) in
einem Zylinderraum (48) fortsetzt, dessen wirksames

Volumen durch einen Steuerkolben (49) veränderbar
ist.

9. Drehkolbenmaschine nach Anspruch 4 oder einem
der folgenden Ansprüche, dadurch gekennzeichnet,
daß ein zentrischer Teil (10) des Kolbenläufers (5)
mittels angestellter Stege (11) als Lüfter ausgebildet ist und die benachbarten Arbeitsraumwandungen
entsprechende Kühlluft-Durchtrittsöffnungen (28)
haben.

10. Drehkolbenmaschine nach Anspruch 1 oder einem
der folgenden Ansprüche, dadurch gekennzeichnet,
daß auf beiden Stirnseiten des Kolbenläufers (5)
je ein konzentrischer Ring von schaufelförmigen
Ausnehmungen (24) ausgebildet ist, denen durch
Düsen (21) in der jeweils benachbarten Arbeitsraumwandung gespanntes Arbeitsmedium zugeführt
werden kann.

11. Drehkolbenmaschine nach Anspruch 10, dadurch
gekennzeichnet, daß die Absperrläufer (12, 13)
stirnseitig mit kreisrunden Platten (25) belegt
sind, in denen ebenfalls schaufelförmige Ausnehmungen (26) vorgesehen sind, in die durch
Düsen (27) in der benachbarten Arbeitsraumwandung
Arbeitsmedium gedrückt werden kann.

12. Drehkolbenmaschine nach Anspruch 4 oder einem
der folgenden Ansprüche, gekennzeichnet durch eine
zweite (Abgas-)Stufe mit koaxialen Kolben- und
Absperrläufern (105, 112, 113), deren Kolben (107)
und Ausnehmungen (110) denen der ersten Stufe
winkelversetzt sind.

13. Drehkolbenmaschine nach einem der Ansprüche 1 bis 3, dadurch gekennzeichnet, daß zur Verwendung als Brennkraftmaschine eine außenliegende Brennkammer (30) vorgesehen ist, der das Arbeitsmedium von einem Verdichter (75) zugeführt wird, in der die Verbrennung erfolgt, und aus der das gespannte Arbeitsmedium an diametral gegenüberliegenden Punkten in den Arbeitsraum (4) eingeleitet wird.

14. Drehkolbenmaschine nach Anspruch 13, dadurch gekennzeichnet, daß der Verdichter (75) in einen Speicher (76) arbeitet.

15. Drehkolbenmaschine nach Anspruch 4 oder Anspruch 13 mit mehreren Kammern, gekennzeichnet durch einen Zwischenspeicher (85), der mit den den einzelnen Kammern zugeordneten Brennkammern (30) über Ventile (92) verbunden ist, welche beim Startvorgang in Abhängigkeit von der Stellung der Kolben (7) im Arbeitsraum (4) öffnen.

16. Drehkolbenmaschine nach Anspruch 15, dadurch gekennzeichnet, daß Sensoren (Nockenscheiben 95, Hebel 93) an der Welle (6) der Kolbenläufer (5) die Ventile (92) steuern.

17. Drehkolbenmaschine nach Anspruch 15, dadurch gekennzeichnet, daß der Zwischenspeicher (85) ein federbelasteter Metallbalg ist.

**Fig.1**

**Fig.2**

## Fig. 3

## Fig. 6

0023529

Fig.4

Fig.5

Fig.7

**Fig.8**

0023529